(19) Europäisches Patentamt
European Patent Office
Office européen des brevets

(11) **EP 2 237 390 A2**

(12) **EUROPEAN PATENT APPLICATION**

(43) Date of publication:
**06.10.2010 Bulletin 2010/40**

(51) Int Cl.:
***H02K 1/27*** *(2006.01)*

(21) Application number: **10152061.7**

(22) Date of filing: **29.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **01.04.2009 US 416231**

(71) Applicant: **General Electric Company Schenectady, NY 12345 (US)**

(72) Inventors:
• **El-Refaie, Ayman Mohamed Fawzi Niskayuna, NY 12309 (US)**
• **Reddy, Patel Bhageerath Madison, WI 53706 (US)**

(74) Representative: **Illingworth-Law, William Illingworth Global Patent Operation - Europe GE International Inc. 15 John Adam Street London WC2N 6LU (GB)**

(54) **Electric machine**

(57) An interior permanent magnet machine is disclosed. The machine comprises an air gap, and a rotor comprising a plurality of multilayered magnets each placed substantially along circumferential chords of the air gap, wherein each of the magnets comprises a plurality of segments and at least one segment adjacent said air gap comprises a high resistivity magnetic material. A method to make an interior permanent magnet machine is also disclosed.

FIG. 4

EP 2 237 390 A2

**Description**

BACKGROUND

The invention relates generally to electro-mechanical machines, and more specifically to interior permanent magnet electrical machines.

Environmental considerations are a primary reason for developing fuel efficient machines. For example, in the automobile industry, there is a current move towards developing hybrid automobiles (that is, automobiles having more than one source of power, such as for instance, diesel and electric), as these have been shown to be more fuel efficient than conventional fossil fuel powered automobiles.

The thrust to develop high-efficiency electrical machines, for instance, for use in hybrid automobiles, will have to be tempered with a cost of manufacturing such electrical machines. Any electrical machine technology that achieves energy efficiency at an undue manufacturing cost will likely not be commercially viable.

Current challenges facing development of cost effective electrical machines for hybrid automobiles are related to power density and efficiency considerations. Current electrical machine technologies suffer from high rotor magnet losses due to their winding structures and high speeds. Attempts to design efficient rotors to mitigate the above losses often result in an increase in complexity of their design, which in turn, makes electrical machines incorporating such designs commercially unattractive.

An electrical machine having a level of efficiency that is enhanced over currently available electrical machines and that can be manufactured in a cost-efficient manner would be highly desirable.

BRIEF DESCRIPTION

Embodiments of the invention are directed towards an electric machine. More specifically, embodiments of the invention are directed towards permanent magnet electric machines.

An interior permanent magnet machine comprising an air gap, and a rotor comprising a plurality of multilayered magnets each placed substantially along circumferential chords of the air gap, wherein each of the magnets comprises a plurality of segments and at least one segment adjacent said air gap comprises a high resistivity magnetic material.

A method for making an interior permanent magnet machine, the method comprising providing a rotor, and providing a plurality of magnets each placed substantially along a circumferential chord of an air gap, wherein each of the magnets comprises a plurality of segments and at least one segment close to the air gap comprises a high resistivity magnetic material.

An permanent magnet machine, the machine comprising an air gap, and a rotor comprising a plurality of magnets each placed substantially along a circumferential chord of the air gap, wherein each of the magnets comprises a plurality of segments and at least one segment adjacent said air gap comprises a high resistivity magnetic material, and a stator, wherein a magnetic flux field produced within the stator due to the plurality of magnets, is bidirectional.

These and other advantages and features will be more readily understood from the following detailed description of preferred embodiments of the invention that is provided in connection with the accompanying drawings.

DRAWINGS

FIG. 1 is a perspective view of a prior art interior permanent magnet electrical machine.

FIG. 2 is a schematic view of a prior art interior permanent magnet electrical machine.

FIG. 3 is a schematic view of a prior art surface permanent magnet electrical machine.

FIG. 4 is a schematic view of an interior permanent magnet electrical machine in accordance with one embodiment of the invention.

FIG. 5 is a tabular representation of a finite element modeling study of eddy current losses within segments of a segmented permanent magnet, in accordance with one embodiment of the invention.

FIG. 6 is a flow chart representation of a method of making an interior permanent magnet electrical machine in accordance with one embodiment of the invention.

DETAILED DESCRIPTION

In the following description, whenever a particular aspect or feature of an embodiment of the invention is said to comprise or consist of at least one element of a group and combinations thereof, it is understood that the aspect or feature may comprise or consist of any of the elements of the group, either individually or in combination with any of the other elements of that group.

In the following specification and the claims that follow, the singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about" or "substantially," may not be limited to the precise value specified, and may include values that differ from the specified value. In at least some instances, the approximating language may correspond to the precision of an instrument for measuring the value.

As used herein, the term "adjacent," when used in context of discussion of different entities comprising, for instance, a permanent magnet electric machine, may refer to the situation where the entities under discussion are disposed immediately next to each other, that is, are contiguous, or it may also refer to a situation wherein intervening entities are disposed between the entities under discussion, that is, the entities under discussion are non-contiguous.

As used herein, the terms "electric machine," and "electrical machine" may sometimes be used interchangeably.

As used herein, the term "within," when used in context of discussion of any physical entity may refer to a bulk of the physical entity or it may refer to a surface of the physical entity, or it may refer to both the bulk and the surface of the physical entity.

In the present discussions it is to be understood that, unless explicitly stated otherwise, any range of numbers stated during a discussion of any region within, or physical characteristic of, an interior permanent magnet machine, is inclusive of the stated end points of the range.

In the present discussions, it is to be understood, as is the practice within the art, the term, "sintered magnets" refers to a class of magnets having high remanance, high energy product, and high coercivity. For instance, it is known in the art that values of energy product in sintered magnets are typically in excess of 20 megaGauss Oersted (MGOe), and can reach up to 50 MGOe. The class of magnets referred to as "bonded magnets" within the art, on the other hand, have lower energy product values of typically lower than 20 MGOe. Bonded magnets are fabricated from powders of cast or heat-treated rare earth material alloys such as neodymium iron boron (NdFeB), or samarium cobalt (SmCo), or by introduction of additives including highly coercive powders. A resistivity of bonded magnets typically lies within a range between about 16 microohm meters to about 20 microohm meters. Comparatively, the resistivity of sintered magnets typically lies within the range between about 1.2 microohm meters to about 1.6 microohm meters.

Electric machines convert electrical energy into mechanical motion and vice versa. Electric machines typically consist of a stator that produces a rotating field when excited by alternating multi-phase current and a rotor (which produces a rotating field), and operate through an interaction of magnetic flux and electric current to produce rotational speed and torque. The considerations related to design and purpose of the stator, and of the rotor, are well known in the art. For instance, one of the key considerations concerns eddy current losses within the stator and rotor during operation of the electrical machine. To reduce eddy current losses, the rotors and stators have traditionally been fabricated out of thin laminations. Non-limiting examples of materials from which the laminations may be fabricated include silicon steel.

A traditional approach to further reduce eddy current losses has included fabricating the stator and/or the rotor from thin laminations, hence reducing the electrical machine stacking factor. However, this approach has a disadvantage in that it results in an increase in the size of the electrical machine. Therefore, this approach has only limited feasibility in mitigating eddy current losses within electric machines. Furthermore, it is noted that an ability to use low loss lamination materials is limited by the cost of the materials.

The need for low cost, high performance, and high efficiency electrical machines is self-evident. A non-limiting example of the use of electrical machines is in traction applications. Operation at high speeds is a typical feature that results in electrical machines delivering enhanced "high" levels of performance. Embodiments of the invention disclosed herein include an internal permanent magnet machine that delivers enhanced performance at a lower cost than currently available electrical machines.

As is known in the art, for high-speed applications, enhanced operational electrical excitation frequencies are needed. It is also known in the art that eddy current losses in the stator, and in the rotor, increase with an increase in operational electrical excitation frequency. The eddy current losses in electrical machines can therefore be significant in high-speed applications.

As mentioned, high speed electrical machines can achieve high levels of operational performance. One of the key challenges of high-speed operation of such electrical machines is the eddy current losses in the rotor, and especially so when the corresponding stator includes fractional slot concentrated electrical windings. Efficient high operational speed electrical machines can be achieved if a mechanism to reduce the inevitable eddy current losses can be devised. It is evident that, for such an enhanced performance electrical machine to be commercially viable, the mechanism must be cost-effective. Further, it will be appreciated that the considerations related to the design of such a mechanism will involve at least structural and material aspects.

Embodiments of the invention disclosed herein propose a low cost and low rotor loss hybrid interior permanent magnet (HIPM) electric machine, the rotor of which includes multiple layers of segmented magnets that include, for example, bonded and sintered magnets that include, for instance, permanent magnetic materials. The electrical machine is referred to as "hybrid" because it includes magnets of differing kinds, for instance, bonded magnets and sintered magnets. The bonded magnets can be composed of any suitable materials (discussed below) and can be in any suitable form. Non-limiting examples of forms of the magnetic material include nanostructured materials. The sintered magnets can be composed of any suitable materials (discussed below) and can be in any suitable form. Non-limiting examples of forms of the magnetic material (bonded or sintered) include nanostructured materials.

Traditional interior permanent magnet electrical machines have included a single layer of permanent magnet content within their rotor poles. Other traditional interior permanent magnet electrical machines include multiple layers of permanent magnet content within their rotor poles. Interior permanent magnet electrical machines that include multiple layers of permanent magnets present several enhancements over interior permanent magnet electrical machines that include a single layer of permanent magnet in terms of operational and performance characteristics of a permanent magnet electric machine. Non-limiting examples of such enhancements include, a reduction in magnetic flux leakage and an improvement in rotor saliency.

Accordingly, permanent magnet electric machines including rotors including multiple layers of magnets exhibit higher overall efficiency, extended speed constant power operating range, and improved power factor. It is also known in the art that an amount of permanent magnet content needed to generate a given amount of torque is a direct function of the saliency of the electric machine. A further advantage therefore, of multiple layer interior permanent magnet electrical machines is a reduction in an amount of permanent magnet content that is required to produce a given torque, as compared to single layer interior permanent magnet electrical machines.

Embodiments of the HIPM electric machine disclosed herein can function as a high-speed electric machine. For a given power rating, this may allow one to reduce the size of an electric machine. This in turn may result in an increased power density (that is, a power output per unit volume of the electrical machine) within the electric machine, which in turn may result in an enhanced performance of the electric machine. An operational cost of such an enhanced performance IPM electric machine is likely less than the operational cost of electric machines that are currently available. In one embodiment, the HIPM includes a multi-phase machine, such as a three-phase machine.

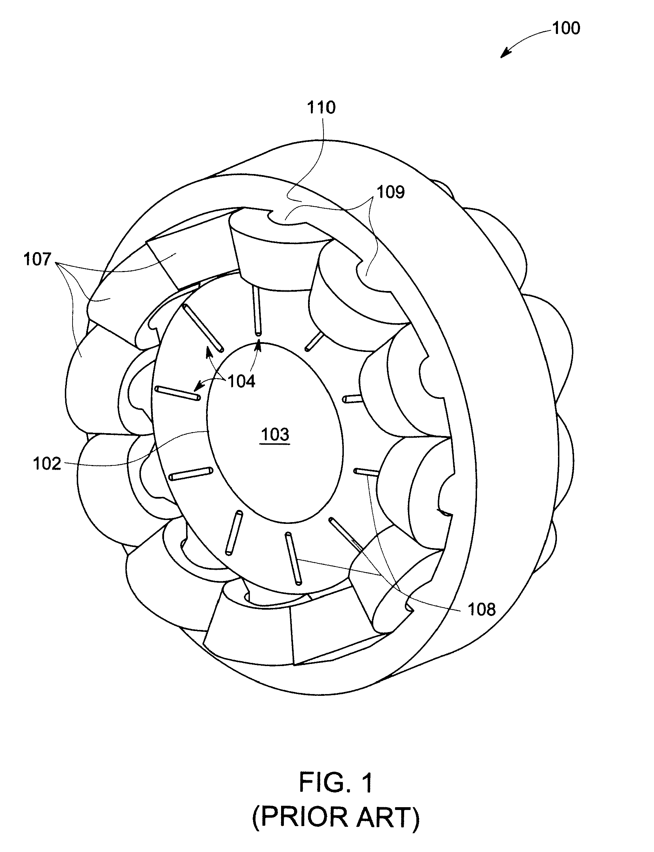

In a typical prior art electrical machine 100 shown in perspective view in FIG. 1, a generally cylindrical rotor 102 comprises a plurality of rotor poles 104, the individual poles of which are generally circumferentially disposed within the rotor 102. A generally cylindrical shaft 103 is defined as a generally centrally disposed opening within the rotor 102. The plurality of poles 104 may comprise a plurality of permanent magnets 108. Disposed cicumferentially enclosing the rotor 102 is a generally cylindrical stator 110. The stator has a plurality of stator teeth 109 facing the plurality of rotor poles 104 and a plurality of slots (not indicated). Each of the plurality of stator teeth 109 are wound with coils of wire 107 such that supplying electric current to the coils causes a production of a rotating magnetic field. This rotating magnetic field interacts with a magnetic field on the rotor 102 side and motivates the rotor 102 to rotate. That is, electromagnetic energy supplied to the coils is converted to mechanical motion which in turn produces torque.

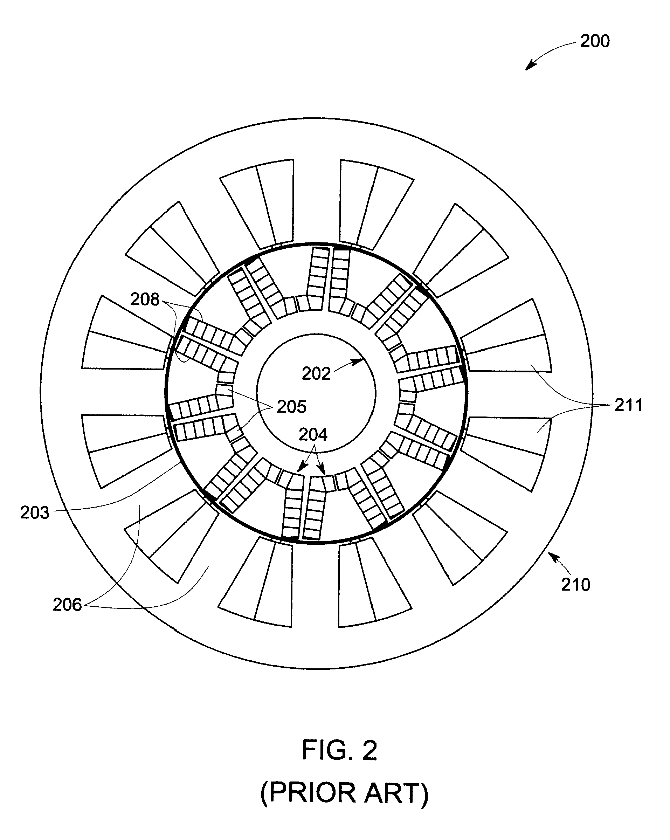

In a typical prior art electrical machine 200 shown schematically in FIG. 2, a generally cylindrical rotor 202 comprises a plurality of rotor poles 204, the individual poles of which are generally circumferentially disposed within the rotor 202. A plurality of permanent magnets 208 are disposed within the plurality of rotor poles 204. Each of the plurality of permanent magnets 208 may include a plurality of segments 205. Quite generally, each of the plurality of magnets 208 may be said to define a corresponding pole of the plurality of rotor poles 204. In the discussions herein, therefore, the phrases, "plurality of rotor poles," and "plurality of permanent magnets," may sometimes be used interchangeably. Therefore, as with the plurality of poles 204, the plurality of permanent magnets 208, may also be considered to be included within the rotor 202. Disposed circumferentially enclosing the rotor 202 is a generally cylindrical stator 210. An air gap 203 separates the rotor 202 and the stator 210. The stator has a plurality of stator teeth 206 facing the plurality of rotor poles 204, and a plurality of stator slots 211. Each of the plurality of stator teeth 206 are wound with coils of wire (not shown) such that supplying electric current to the coils causes a production of a rotating magnetic field. This rotating magnetic field interacts with a magnetic field on the rotor 202 side and motivates the rotor 202 to rotate. That is, electromagnetic energy supplied to the coils is converted to mechanical motion which in turn produces torque.

Electrical machines including permanent magnets may be considered as magnetic circuits. The magnetic circuit defined by an electrical machine may then include, a rotor (for example, of type 202) including a plurality of rotor poles (for example, of type 204), a plurality of permanent magnets (for instance, of type 208), a stator (for example, of type 210) including a plurality of stator teeth (for example, of type 206), a plurality of stator slots (for example, of type 211), and an air gap between the rotor and the stator (for example, of type 203). At any instant during rotation of the rotor, the magnetic circuit will have a reluctance. The reluctances of the magnetic circuits is a function of, for example, a number of the rotor 202 transitions, from being opposite a stator to being opposite a gap between the teeth. A reluctance torque is generated attendant due to changes in reluctance of magnetic circuits in the electrical machine due to the rotation of the rotor. The generated reluctance torque is a factor governing the performance of the electrical machine. As is known in the art, higher reluctance torque leads to a reduction in permanent magnet torque. The reduction in permanent magnet torque in turn results in a reduction in the required permanent magnet content within the electrical machine. The reduction in permanent magnet content in turn results in a reduction in the cost of the electrical machine.

The plurality of rotor poles 204 may be considered to house the plurality of permanent magnets 208. The plurality of permanent magnets 208 can be subjected to significant eddy current losses within the rotor 202 due to the asynchronous rotating fields from the stator side, and especially when the stator includes fractional slot concentrated electrical windings. The eddy current losses within the rotor 202 in turn contribute to a decrease in the overall efficiency of the electric machine 200. Therefore, an understanding of the spatial distribution, and corresponding magnitude of the eddy current losses within the plurality of permanent magnets 208 is required for mitigation of eddy current losses within the rotor 202.

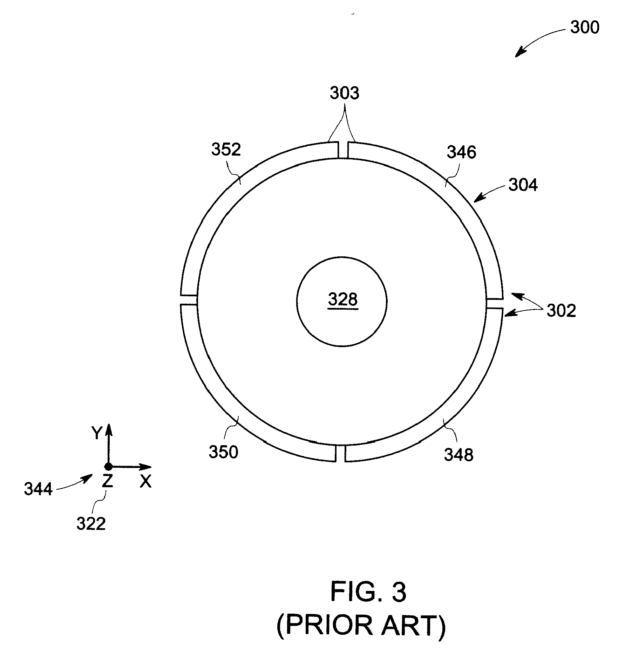

Typical prior art electrical machines also include surface permanent magnet electrical machines, such as the surface permanent magnet electrical machine 300 shown schematically in FIG. 3. According to the embodiment 300, a plurality of poles 302 are disposed on the surface of the rotor 304. In the embodiment shown in FIG. 3, the plurality of poles 302 include a plurality of permanent magnets 303 such as the permanent magnets 346, 348, 350, and 352. A generally cylindrical shaft 328 is defined as a generally centrally disposed opening within the rotor 304. According to the embodiment 300, the plurality of poles 302 include a plurality of hard magnets. Those skilled in the art would appreciate that the rotor 304 may be fabricated from a plurality of rotor laminations (not shown) stacked together along a thickness direction 322 (z-direction of the right hand cartesian coordinate system 344) of the rotor 304.

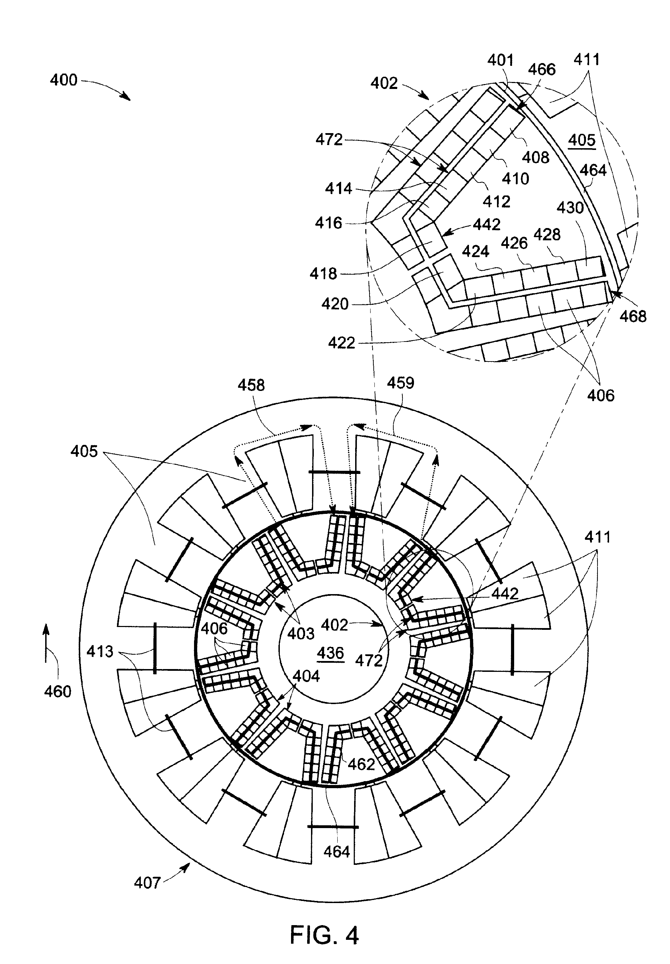

As discussed herein, the rotor of an electrical machine is traditionally fabricated in the form of thin laminations to reduce eddy current losses. Quite generally, the rotor may also include a plurality of multilayered poles. The plurality of multilayered poles in turn include a plurality of permanent magnets. Indeed, as discussed herein, the plurality of permanent magnets may be considered to define the plurality of multilayered poles. These permanent magnets, being electrically conductive, support eddy currents, and therefore are also a seat of eddy current losses. According to an embodiment of the invention, an HIPM electric machine 400, shown for instance in FIG. 4, includes a rotor 402 that includes a plurality of multilayered rotor poles 403, the individual poles of which are generally circumferentially disposed within the rotor 402. The electrical machine 400 further includes an air gap 464. Quite generally, "imaginary" circumferential chords that connect any two points along an inner circumference 401 of the air gap 464 may be imagined. A non-limiting example of such a circumferential chord may be imagined as the imaginary chord connecting locations 466 and 468 along inner the circumference 401 of the air gap 464. A multilayered magnet 472 is disposed, embedded within the rotor 402, so that its two end portions lie along this circumferential chord. The electrical machine 400 further includes a plurality of permanent magnets 404, wherein each of the plurality of permanent magnets 404 has been fabricated out of a plurality of permanent magnet segments 406. The individual poles of the plurality of multilayered rotor poles 403 are generally circumferentially disposed as discussed above. Similarly therefore, as per the discussions herein, the plurality of permanent magnets 404 are also generally circumferentially disposed as discussed above. According to an embodiment of the HIPM machine disclosed herein, an electrical insulation 462 may be disposed between any two adjacent permanent magnet segments of the plurality of multilayered permanent magnet segments 406. Such a plurality of "segmented permanent magnets" 404 including electrical insulation between any two adjacently disposed permanent magnet segments 406 present a reduced path length over which eddy currents can travel, thereby resulting in a reduction of the contribution from the induced "permanent magnet eddy current losses" to the total eddy current loss within the rotor 402 or more generally within the HIPM electric machine 400. Further, within the HIPM electrical machine 400 shown in FIG. 4, the air gap 464 separates the rotor 402 from a stator 407 having a plurality of stator teeth 405 and a plurality of stator slots 411, and a generally cylindrical shaft 436 is defined as a generally centrally disposed opening within the rotor 402.

The above feature wherein each of the plurality of multilayered permanent magnets 404 is fabricated from a plurality of permanent magnet segments of type 406, results in a reduction of eddy current losses as compared to, for instance, the prior art electrical machines 200, or for instance, over the prior art electrical machine 300. This in turn likely results in an enhancement of the efficiency of the HIPM electric machine 400 over the prior art interior permanent magnet electric machine 200, or over the prior art surface permanent magnet electric machine 300. Any scheme to further mitigate eddy current losses within the plurality of permanent magnets 404, to be commercially viable, must not adversely affect torque production ability of the electric machine 400. As discussed herein, sintered magnets typically have higher energy products as compared to bonded magnets. Electrical machines that employ sintered magnets therefore, typically display higher levels of machine torque and higher levels of power density as compared to electrical machines that employ bonded magnets. The electrical resistivity of sintered magnets however, being typically lower than the electrical resistivity of bonded magnets, results in sintered magnets displaying eddy current losses that are lower as compared to the eddy current losses displayed by bonded magnets. Additionally, because sintered magnets have an energy product that is higher than bonded magnets, embodiments of the electrical machine 400 wherein the each of the plurality of permanent magnets 404 include only sintered magnets, have a higher energy density as compared to embodiments of the electrical machine 400, wherein the each of the plurality of permanent magnets 404 include only bonded magnets. Again, because sintered magnets have an energy product that is higher than bonded magnets, embodiments of the electrical machine 400 wherein the each of the plurality of permanent magnets 404 include only sintered magnets, have a lower torque production capability as compared to embodiments of the electrical machine 400, wherein the each of the plurality of permanent magnets 404 include only bonded magnets. Embodiments of the electrical machine 400, wherein some of the segments of the plurality of permanent magnet segments 406 belonging to any one or more of the permanent magnets of the plurality of permanent magnets 404 include both sintered and bonded magnets will have a torque production capability that substantially lies between the torque production capability of embodiments of electrical machine 400 that include only sintered magnets and embodiments of electrical machine 400 that include only bonded magnets.

Referring again to FIG. 4, as discussed herein, the individual permanent magnet segments of the plurality of permanent magnet segments 406 will each be a contributor to a certain amount of eddy current loss. For instance, consider as a non-limiting example, the earlier presented HIPM electric machine 400 including the rotor 402, the plurality of multilayered rotor poles 403 include a plurality of multilayered segmented magnets 404, wherein, each of the permanent magnets includes or is fabricated from, for instance, twelve permanent magnet segments. The twelve permanent magnet segments are labeled via reference numerals 408, 410, 412...430. Each of the plurality of rotor poles 403 are generally shaped as a generally smooth curve, for instance, "U"-shaped, "V"-shaped, or semi-circular. Each of the plurality of poles can also be in the form of a stepwise linear shape. In the example shown in FIG. 400, each of the plurality of multilayered poles are "U"-shaped. The plurality of multilayered poles 403 include a plurality of multilayered permanent magnets 404, wherein all layers constituting any particular multilayered permanent magnet of the plurality of permanent magnets 404 constitute a same "effective" magnetic pole, and wherein adjacent multilayered permanent magnets effectively constitute opposing magnetic poles. Such a placement of the permanent magnets within a particular pole has implications for the magnetic flux flow configurations within the stator 407 and rotor 402 of the electric machine 400. It is evident that the plurality of permanent magnets 404 establish a magnetic flux (for instance, of type 458 or 459) field in a substantially radial direction 460 of the rotor 402. Even though in the embodiment shown in FIG. 4, only two layers of segmented permanent magnets per pole of the plurality of multilayered rotor poles 403 are depicted, other embodiments of the invention can include any number of layers of segmented permanent magnets.

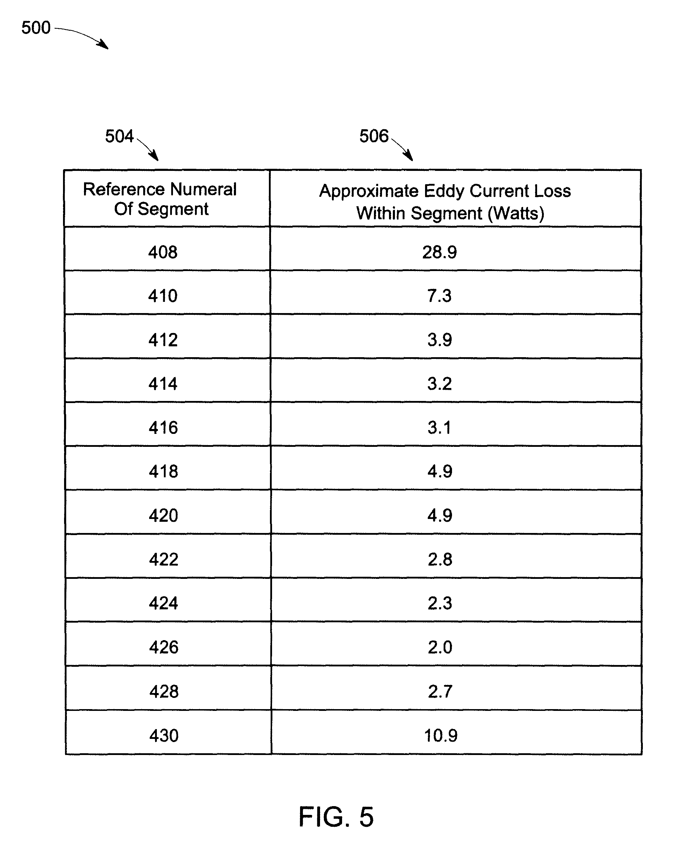

As illustrated in FIG. 4, each of the different layers of individual multilayered permanent magnets belonging to the plurality of permanent magnets 404 substantially are "U"-shaped. Considering, for instance a permanent magnet layer 442 of a particular permanent magnet 472, it may be evident that permanent magnet segments 408 and 430 are disposed closest to the inner circumference 401 of the air gap 464. One may estimate the eddy current loss within each of the permanent magnet segments 408, 410, 412...430, via, for instance, a finite element modeling study. Such a study can provide information about the spatial distribution of eddy current losses within the plurality of permanent magnets 404. One example of such a study are presented in tabular form in FIG. 5.

FIG. 5 presents, in tabular form 500, the results of an exemplary finite element modeling study of the eddy current loss within one of the plurality of multilayered permanent magnets 404, for example, segmented layer 442 of multilayered permanent magnet 472. The estimates of the eddy current loss within each of the permanent magnet segments of segmented permanent magnet layer 442 are presented in table 500. The electric machine 400, being substantially radially symmetrical, the trends of the results of such a study, when performed for the other permanent magnets of the plurality of permanent magnets 404, would substantially be similar to the results presented in table 500. Column 504 lists the contiguously placed individual permanent magnet segments for the permanent magnet layer 442, with reference numerals 408, 410, 412...430, as per their locations along the permanent magnet layer 442, and column 506 lists the estimated eddy current losses within the individual permanent magnet segments 408, 410, 412...430 of permanent magnet layer 442 of multilayered permanent magnet 472. A simplified mathematical expression that relates eddy current loss "$E$" of a permanent magnet segment to an electrical resistance "R" of a permanent magnet segment is given as,

$$E \propto \frac{1}{R} \qquad\qquad (1)$$

It is evident from expression (1) that, since E and R are inversely related, a change by, for instance, a factor of "N" in R would result in a change of "1/N" in E. For example, if R increases by a factor of N, then E would decrease by a factor of N.

As per the discussions herein, it may be evident from a perusal of columns 504 and 506, that eddy current losses in the permanent magnet segments closer to the air gap 464 make a substantial contribution to the total eddy current losses due and within the plurality of permanent magnets 404. For instance, with respect to the inner circumference 401, the first permanent magnet segment 408 has an eddy current loss of about 28.9 Watts, the permanent magnet segment 410 has an eddy current loss of about 7.3 Watts, the permanent magnet segment 428 has an eddy current loss of about 2.7 Watts, and the permanent magnet segment 430 has an eddy current loss of about 10.9 Watts. Together, these four segments, by themselves, account for more than 64% of the total eddy current loss of about 77 Watts (sum of eddy current losses listed in column 506) within the permanent magnet layer 442. Based on this study therefore, an effective strategy to mitigate eddy current losses within the rotor 402 would target to reduce the eddy current loss within the permanent magnet segments, such as for instance, 408 and 430, that are disposed closer to the air gap 464. This is so because, as the finite element modeling studies (the results of which are presented in table 500) have revealed, it is the permanent magnet segments disposed close to the air gap 464 that contribute substantially to the eddy current losses within the particular permanent magnet to which they belong, and more generally to the eddy current loss within the rotor 402.

In accordance with an embodiment of the invention therefore, a permanent magnet electric machine (for instance, of type 400) including a rotor (for instance, of type 402) is disclosed. The rotor includes an air gap (for instance, of type 464), and a plurality of multilayered magnets (for instance, of type 404). As discussed herein, quite generally, "imaginary" circumferential chords that connect any two points along an inner circumference (for instance, of type 401) of the air gap may be imagined. Considering again FIG. 4, a non-limiting example of such a circumferential chord may be imagined as the imaginary chord connecting points 466 and 468 along the inner circumference 401 of the air gap 464. A multilayered magnet 472 is disposed, embedded within the rotor 402, so that its two end portions lie along this circumferential chord. Furthermore, each layer (for instance, of type 442) of each multilayered permanent magnet (for instance, of type 472) of the plurality of permanent magnets includes a plurality of segments (for instance, of type 406) and at least one segment adjacent said air gap comprises a high resistivity magnetic material. Non-limiting examples of permanent magnet materials include, bonded magnets or sintered magnets. According to one embodiment of the HIPM electrical machine 400, the bonded magnets have an electrical resistivity of up to about 20 microohm meters. According to one embodiment of the HIPM electrical machine 400, the sintered magnets have an electrical resistivity that lies within a range from about 1.2 microohm meters to about 1.6 microohm meters.

In one embodiment, the electrical machine may have a stator 407 including a plurality of segmented structures (not shown for clarity), a plurality of stator slots 411, and a plurality of fractional slot concentrated electrical windings 413, wherein each electrical winding of the plurality of fractional slot concentrated electrical windings 413 are individually wound around a tooth belonging to a plurality of stator teeth 405. It is likely that, the use of fractional slot concentrated windings together with a segmented stator structure helps reduce material and manufacturing cost of the electrical machine 400. This is due to the fact that fractional slot concentrated windings result in an enhanced slot fill factor as a well as a reduction of electrical winding material (usually copper) that is required in the end turns of the windings. On the other hand, fractional slot concentrated windings also result in enhanced levels of a space harmonic content within the electrical machine 400. During operation of the electrical machine 400, when the plurality of fractional slot concentrated windings 413 are excited via alternating multi-phase currents, components of the space harmonic content generate rotating magnetic fields in the air gap 464. The rotating magnetic fields are typically not in synchronism with the rotation of the rotor 402, and therefore induce eddy currents losses within at least the plurality of permanent magnets 404, and more generally within the rotor 402,.

As is known in the art, and as discussed herein, fabricating each of the plurality of permanent magnets 404 from a plurality of segments of type 406 results in a decrease in eddy current losses within the plurality of permanent magnets 404, and more generally within the rotor 402. Embodiments of the invention proposed herein, include a plurality of permanent magnets 404, wherein at least one of the plurality of permanent magnets 404 includes a plurality of segments (of type 406) and wherein at least one of the segments of the plurality of segments includes a high resistivity permanent magnet such as a bonded magnet.

In accordance with an embodiment of the invention, a HIPM electric machine is disclosed (for instance, of type 400). The HIPM electric machine includes, an air gap (for instance, of type 464), and a rotor (for instance, of type 402) including, a plurality of multilayered magnets (for instance, of type 404). As discussed herein, quite generally, "imaginary" circumferential chords that connect any two points along an inner circumference (for instance, of type 401) of the air gap 464 may be imagined. Considering again FIG. 4, a non-limiting example of such a circumferential chord may be imagined as the imaginary chord connecting points 466 and 468 along the inner circumference 401 of the air gap 464. A multilayered magnet 472 is disposed, embedded within the rotor 402, substantially so that its two end portions lie along this circumferential chord. Furthermore, each layer of each permanent magnet of the plurality of permanent magnets 404 comprises a plurality of segments (for instance, of type 406) and at least one segment adjacent the air gap comprises a high resistivity magnetic material. The HIPM electric machine may further include a stator (for instance, of type 407), wherein a magnetic flux field (for instance, of type 458 and 459) produced within the stator due to the plurality of magnets, is bidirectional.

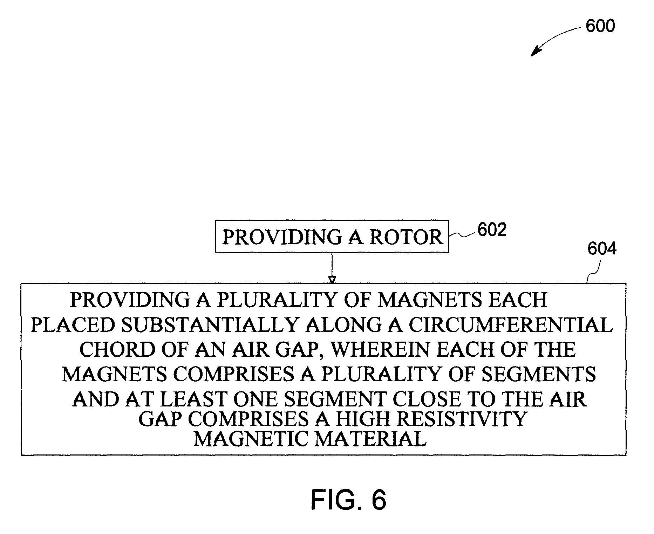

In accordance with one embodiment of the invention, a method 600 for making a HIPM electric machine (for instance, of type 400) is provided, as illustrated via a flow chart shown in FIG. 6. At step 602 of the method 600, a rotor (for instance, of type 402) is provided. At step 604, a plurality of magnets (for instance, of type 404) are provided. As discussed herein, quite generally, "imaginary" circumferential chords that connect any two points along a inner circumference (for instance, of type 401) of the air gap 464 may be imagined. Considering again FIG. 4, a non-limiting example of such a circumferential chord may be imagined as the imaginary chord connecting points 466 and 468 along the inner circumference 401 of the air gap 464. A multilayered magnet 472 is disposed, embedded within the rotor 402, so that its two end portions lie along this circumferential chord. Furthermore, each layer of each permanent magnet of the plurality of permanent magnets 404 comprises a plurality of segments (for instance, of type 406) and at least one segment adjacent the air gap comprises a high resistivity magnetic material.

As discussed herein, the presence of the high resistivity permanent magnet segments within any individual segmented permanent magnet belonging to the plurality of permanent magnets (for instance, of type 404) likely results in a change in the eddy current loss within the particular individual permanent magnet. Non-limiting examples of high resistivity permanent magnets include bonded magnets. It is remarked that, rotors (for instance, of type 402) may be designed so that any or all of the permanent magnet segments (for instance, of type 406) may be composed out of high resistivity permanent magnets. The high resistivity permanent magnets may in turn be fabricated out of any suitable known permanent magnet materials. Another important consideration is the change in the torque production capability of the electrical machine (for instance, of type 400) after any one or more permanent magnet segments have been fabricated out of high resistivity permanent magnetic materials.

As discussed herein, the inclusion of high resistivity permanent magnet segments among the permanent magnet segments from which the individual permanent magnets belonging to the plurality of permanent magnets 404 are fabricated affects the torque production ability of the HIPM electrical machine 400. As per the discussions herein, fabrication of only a few permanent magnet segments close to air gap from bonded magnet materials is required in order to achieve significant mitigation of eddy current losses within the plurality of permanent magnets 404. The torque production ability of such an electric machine containing bonded magnets, is therefore not expected to be significantly less as compared to an electric machine that includes only sintered magnets.

It is evident from expression (1) that if the sintered magnet has a resistance "N" times the resistance of the segment that it replaces, then the eddy current loss "$E$" in that segment would come down by a factor of "N". As a non-limiting example, if the bonded magnet has a resistivity of about twenty times the resistivity of the sintered magnet (that is, N = about 20), then, according to expression (1), the eddy current loss due the particular segment would also be correspondingly reduced by a factor of about twenty.

For instance, as is evident from table 500 presented in FIG. 5, the eddy current losses in permanent magnet segments 408 and 430 when they are composed of sintered magnets, are about 28.9 Watts and 10.9 Watts respectively. It is clear then, that if permanent magnet segments 408 and 430 were to now be composed of bonded magnet segments that have a resistance that is, for instance, about 20 times the resistance of the sintered magnet segment that they replace (that is, N = about 20), the value of eddy current losses are reduced to about 39 Watts (down from about 77 Watts). In other words, a decrease in eddy current losses of about 49% is achievable for a cost equivalent only to the cost of fabricating a few (in the present instance, two) segments out of high resistivity permanent "bonded" magnets. Additionally, the invention is contemplated for utilization with future techniques and materials that aid in mitigation of eddy current losses within, and/or in enhancement of torque production capability of, an electrical machine.

In one embodiment of the invention, the high resistivity permanent magnetic material includes at least one compound including a rare earth atom. Non-limiting examples of high resistivity bonded permanent magnetic materials include neodymium iron boron (NdFeB), and samarium cobalt (SmCo). In one embodiment of the invention, the high resistivity permanent magnetic materials may be fabricated in the form of a powder. In one embodiment of the invention, the high resistivity permanent magnetic materials are fabricated in the form of a powder that includes particles with sizes within a range from about 2 micrometers to about 10 micrometers. In one embodiment of the invention, the high resistivity permanent magnetic material has an electrical resistivity within a range from about 15 microohm meters to about 20 microohm meters.

In one embodiment of the invention, the high resistivity hard magnetic material independently includes a compound including at least one rare earth atom.. Non-limiting examples of high resistivity hard magnetic material include barium hexaferrites, strontium hexaferrites, ferrites, and alnico.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Aspects of the present invention are defined in the following numbered clauses:

1. An interior permanent magnet machine comprising:

an air gap; and

a rotor comprising a plurality of multilayered magnets each placed substantially along circumferential chords of the air gap, wherein each of the magnets comprises a plurality of segments and at least one segment adjacent said air gap comprises a high resistivity magnetic material.

2. The interior permanent magnet machine of clause 1, wherein the magnets establish a magnetic flux field in a radial direction of the rotor.

3. The interior permanent magnet machine of clause 1 or clause 2, further comprising an electrical insulation disposed between adjacent magnetic segments.

4. The interior permanent magnet machine of any one of the preceding clauses, wherein at least one of the plurality of magnetic segments comprises a sintered magnet.

5. The interior permanent magnet machine of clause 4, wherein the sintered magnet has an electrical resistivity of up to about 1.4 microohm meters.

6. The interior permanent magnet machine of any one of the preceding clauses, wherein at least one of the plurality of magnetic segments comprises a bonded magnet.

7. The interior permanent magnet machine of clause 6, wherein the bonded magnet has an electrical resistivity of up to about 20 microohm meters.

8. The interior permanent magnet machine of any one of the preceding clauses, wherein the machine comprises a multi-phase machine.

9. The interior permanent magnet machine of any one of the preceding clauses, wherein each of the plurality of magnets independently comprise a permanent magnetic material.

10. The interior permanent magnet machine of clause 9, wherein the permanent magnetic material comprises a rare earth atom.

11. The interior permanent magnet machine of clause 9, wherein the permanent magnetic material comprises neodymium iron boron, samarium cobalt, ferrites, or alnico.

12. The interior permanent magnet machine of any one of clauses 9 to 11, wherein the permanent magnetic material comprises a powder.

13. The interior permanent magnet machine of clause 12, wherein the powder comprises particles with sizes within a range from about 2 micrometers to about 10 micrometers.

14. A method for making an interior permanent magnet machine, said method comprising:

providing a rotor; and

providing a plurality of magnets each placed substantially along a circumferential chord of an air gap, wherein each of the magnets comprises a plurality of segments and at least one segment close to the air gap comprises a high resistivity magnetic material.

15. The interior permanent magnet machine of clause 14, wherein the magnets establish a magnetic flux field in a radial direction of the rotor.

16. The interior permanent magnet machine of clause 14 or clause 15, further comprising an electrical insulation disposed between adjacent magnetic segments.

17. The interior permanent magnet machine of any one of clauses 14 to 16, wherein at least one of the plurality of magnetic segments comprises a sintered magnet.

18. The interior permanent magnet machine of clause 17, wherein the sintered magnet has an electrical resistivity of up to about 1.4 microohm meters.

19. The interior permanent magnet machine of any one of clauses 14 to 18, wherein at least one of the plurality of magnetic segments comprises a bonded magnet.

20. The interior permanent magnet machine of clause 19, wherein the bonded magnet has an electrical resistivity of up to about 20 microohm meters.

21. The interior permanent magnet machine of any one of clauses 14 to 20, wherein the machine comprises a multi-phase machine.

22. The interior permanent magnet machine of any one of clauses 14 to 21, wherein each of the plurality of magnets independently comprise a permanent magnetic material.

23. The interior permanent magnet machine of clause 22, wherein the permanent magnetic material comprises a rare earth atom.

24. The interior permanent magnet machine of clause 22, wherein the permanent magnetic material comprises neodymium iron boron, samarium cobalt, ferrites, or alnico.

25. The interior permanent magnet machine of any one of clauses 22 to 24, wherein the permanent magnetic material comprises a powder.

26. The interior permanent magnet machine of clause 25, wherein the powder comprises particles with sizes within a range from about 2 micrometer to about 10 micrometer.

27. An interior permanent magnet machine, said machine comprising:

an air gap; and

a rotor comprising:

a plurality of magnets each placed substantially along a circumferential chord of the air gap, wherein each of the magnets comprises a plurality of segments and at least one segment adjacent said air gap comprises a high resistivity magnetic material; and

a stator, wherein a magnetic flux field produced within the stator due to the plurality of magnets, is bidirectional.

**Claims**

1. An interior permanent magnet machine comprising:

an air gap; and
a rotor comprising a plurality of multilayered magnets each placed substantially along circumferential chords of the air gap, wherein each of the magnets comprises a plurality of segments and at least one segment adjacent said air gap comprises a high resistivity magnetic material.

2. The interior permanent magnet machine of claim 1, wherein the magnets establish a magnetic flux field in a radial direction of the rotor.

3. The interior permanent magnet machine of claim 1 or claim 2, wherein at least one of the plurality of magnetic segments comprises a sintered magnet.

4. The interior permanent magnet machine of claim 3, wherein the sintered magnet has an electrical resistivity of up to about 1.4 microohm meters.

5. The interior permanent magnet machine of any one of the preceding claims, wherein at least one of the plurality of magnetic segments comprises a bonded magnet.

6. The interior permanent magnet machine of claim 5, wherein the bonded magnet has an electrical resistivity of up to about 20 microohm meters.

7. The interior permanent magnet machine of any one of the preceding claims, wherein each of the plurality of magnets independently comprise a permanent magnetic material.

8. The interior permanent magnet machine of claim 7, wherein the permanent magnetic material comprises a rare earth atom.

9. A method for making an interior permanent magnet machine, said method comprising:

   providing a rotor; and
   providing a plurality of magnets each placed substantially along a circumferential chord of an air gap, wherein each of the magnets comprises a plurality of segments and at least one segment close to the air gap comprises a high resistivity magnetic material.

10. The interior permanent magnet machine of claim 9, wherein the magnets establish a magnetic flux field in a radial direction of the rotor.

11. The interior permanent magnet machine of claim 9 or claim 10, further comprising an electrical insulation disposed between adjacent magnetic segments.

12. The interior permanent magnet machine of any one of claims 9 to 11, wherein at least one of the plurality of magnetic segments comprises a sintered magnet.

13. The interior permanent magnet machine of claim 12, wherein the sintered magnet has an electrical resistivity of up to about 1.4 microohm meters.

14. The interior permanent magnet machine of any one of claims 9 to 13, wherein at least one of the plurality of magnetic segments comprises a bonded magnet.

15. A permanent magnet machine, said machine comprising:

   an air gap; and
   a rotor comprising:

      a plurality of magnets each placed substantially along a circumferential chord of the air gap, wherein each of the magnets comprises a plurality of segments and at least one segment adjacent said air gap comprises a high resistivity magnetic material; and
      a stator, wherein a magnetic flux field produced within the stator due to the plurality of magnets, is bidirectional.

FIG. 1
(PRIOR ART)

FIG. 2

(PRIOR ART)

FIG. 3
(PRIOR ART)

FIG. 4

500

504    506

| Reference Numeral Of Segment | Approximate Eddy Current Loss Within Segment (Watts) |
|---|---|
| 408 | 28.9 |
| 410 | 7.3 |
| 412 | 3.9 |
| 414 | 3.2 |
| 416 | 3.1 |
| 418 | 4.9 |
| 420 | 4.9 |
| 422 | 2.8 |
| 424 | 2.3 |
| 426 | 2.0 |
| 428 | 2.7 |
| 430 | 10.9 |

# FIG. 5

600

PROVIDING A ROTOR ~602

604

PROVIDING A PLURALITY OF MAGNETS EACH PLACED SUBSTANTIALLY ALONG A CIRCUMFERENTIAL CHORD OF AN AIR GAP, WHEREIN EACH OF THE MAGNETS COMPRISES A PLURALITY OF SEGMENTS AND AT LEAST ONE SEGMENT CLOSE TO THE AIR GAP COMPRISES A HIGH RESISTIVITY MAGNETIC MATERIAL

FIG. 6